# FASCICULE DE BREVET EUROPEEN

(11) **EP 2 330 404 B1**
(45) Date de publication et mention de la délivrance du brevet: **23.12.2015**
(21) Numéro de dépôt: 10193714.2
(22) Date de dépôt: 03.12.2010
(51) Int. Cl.: G01N 3/36, G01M 3/32, G01M 5/00

(54) **DISPOSITIF DE TEST DE SÉPARATEUR SOUPLE**
TESTVORRICHTUNG ZUM TESTEN VON EINER BIEGSAMEN TRENNWAND
TEST DEVICE FOR TESTING A FLEXIBLE SEPARATOR

(30) Priorité: 04.12.2009 FR 0958672
(43) Date de publication de la demande: 08.06.2011
(73) Titulaire: INRID SAS, 92700 Colombes (FR)
(72) Inventeur: Houssais, Alain, 95290, L'ISLE-ADAM (FR)
(74) Mandataire: Intès, Didier Gérard André

(56) Documents cités:
- GB-A- 1 389 680

## Description

L'invention concerne un procédé et son dispositif pour tester la fiabilité d'un séparateur souple associé à une chambre rigide et divisant cette dernière en une capacité liquide et une capacité gaz de volumes variables tels que notamment les séparateurs souples séparant un liquide et un gaz dans les accumulateurs dits hydrauliques.

Les variations de volumes respectifs des capacités liquide et gaz entrainent des déformations répétitives du séparateur souple et donc, au bout d'un certain temps, une rupture du séparateur souple. La fiabilité du séparateur souple conditionne la fiabilité de l'appareil auquel il est associé.

Pour évaluer la fiabilité, d'un accumulateur hydraulique par exemple, il est connu de monter un tel accumulateur équipé d'un séparateur souple, sur un banc d'essai comprenant des moyens pour faire varier cycliquement le volume de liquide entraînant la déformation du séparateur souple. Ce procédé de test de la fiabilité d'un séparateur nécessite que le banc d'essai soit équipé d'un circuit hydraulique complexe et relativement vulnérable, en raison notamment de la nécessité de prévoir des moyens tels que par exemple une vanne à quatre voies pour inverser le sens du débit du liquide dans l'accumulateur, propre à entraîner les variations de volume et les déformations du séparateur. De plus, les inerties et pertes de charges inhérentes à un tel circuit hydraulique limitent la rapidité des alternances de cycles de déformation. La durée des tests de fiabilité pour un nombre donné de cycles est donc très importante. C'est pourquoi pour des raisons industrielles et économiques on est incité à limiter souvent le nombre de cycles. Ceci pose problème pour certaines applications où la fiabilité doit être renforcée et où il serait souhaitable de poursuivre les tests au-delà de 10 000 000 de cycles, voire jusqu'à la rupture alors qu'ils sont actuellement souvent limités au plus à 2 000 000 de cycles, pour les raisons exposées ci-dessus.

Le document GB1389680 décrit une machine de test hydraulique comportant deux chambres rigides, chacune étant divisée par un séparateur souple.

Le procédé objet de l'invention de par sa conception évite entre autres la nécessité d'un circuit hydraulique complexe et permet d'accélérer le rythme des cycles (4 à 6 Hertz au lieu de 1 ou 2 Hz), et donc de raccourcir substantiellement la durée des tests tout en les poursuivant jusqu'à la rupture du séparateur. De plus, grâce à son fonctionnent en « push pull », le procédé objet de l'invention entraine une consommation d'énergie nettement inférieure à celle du système actuel précédemment rappelé avec une construction relativement légère.

De plus, ce procédé fait intervenir une pression notablement plus faible que la pression d'utilisation du séparateur en service. A cet égard on rappellera que certains accumulateurs hydrauliques utilisant un séparateur souple, par exemple une vessie en élastomère, sont prévus pour des pressions d'utilisation pouvant excéder les 700 bar alors que le dispositif suivant l'invention peut fonctionner à une pression de l'ordre de 2 à 3 bar.

Le fait de procéder à pression réduite mais sensiblement dans le même rapport de compression liquide/gaz, provoque des déformations comparables sur le séparateur tout en permettant d'effectuer des cycles de déformation à un rythme élevé (quelques hertz) ce qui permet de mieux évaluer la durée de vie du séparateur en tant que tel, en poussant les essais jusqu'à la rupture du séparateur avec des délais réduits et admissibles compte tenu des contraintes industrielles.
L'invention permet d'atteindre cet objectif.

Tout particulièrement, l'invention concerne un dispositif de test pour séparateur souple selon l'objet de la revendication indépendante 1, ledit séparateur étant du type conçu pour constituer la vessie d'un accumulateur hydraulique. Le dispositif de test pour séparateur souple comprend au moins deux chambres rigides semblables accueillant chacune un séparateur précité monté de façon étanche pour définir une capacité liquide entre la chambre rigide et la paroi externe du séparateur et une capacité gaz constituée par l'intérieur du séparateur lui-même. Les deux capacités gaz communiquent en permanence pendant le test et les deux capacités liquides communiquent avec des moyens faisant varier alternativement et en opposition de phase d'une même quantité le volume de liquide dans chacune d'elles.

Les variations de volume de liquide dans chacune des deux capacités liquides sont sensiblement égales.

Le test s'opère sur deux séparateurs précités semblables. En cas de test destructif, les cycles sont comptés jusqu'à rupture de l'un des séparateurs.

L'agencement tel que défini ci-dessus permet de bien maîtriser, de façon répétitive, les déformations du séparateur en contrôlant les transferts de fluide liquide et gazeux tant à l'extérieur qu'à l'intérieur du séparateur formant vessie. On est ainsi assuré que, d'un cycle à l'autre, le séparateur se déformera toujours de la même façon et toujours dans des conditions correspondant aux conditions normales d'utilisation. L'utilisation en "push-pull" de ces deux séparateurs semblables permet de façon simple de bien maîtriser ses déformations mais il est à noter que toute installation, même plus complexe, propre à contrôler de façon répétitive les transferts de gaz et de liquide de part et d'autre d'au moins un tel séparateur en sorte que sa déformation soit sensiblement identique de cycle en cycle et corresponde à sa déformation en condition normale d'utilisation, devrait être considérée comme conforme à l'invention.

L'interaction entre les deux capacités gaz , provoquant une force de réaction motrice due au débit de gaz entrant alternativement dans l'une puis l'autre des capacités, assure sans recourir à des moyens supplémentaires complexes comme par exemple des boucles de régulation pneumatique une constance des caractéristiques de déformation des séparateurs souples telles que choisies comme la certitude du même nombre effectif de cycles programmés pour les deux vessies, tout au long du déroulement du test.

Selon un mode de réalisation, le dispositif est caractérisé en ce que chaque capacité liquide communique directement avec une chambre déformable, et en ce que lesdites chambres déformables sont de même volumes et couplées à des moyens d'actionnement leur imprimant des déformations semblables en opposition de phase.

Par exemple, chaque chambre déformable a la forme d'un coussin déformable en communication avec une extrémité de la chambre rigide correspondante et les coussins sont couplés à un levier dont le point de pivotement est équidistant des axes des dits coussins.

De préférence, les coussins portent chacun un fond rigide sur lequel vient s'articuler le levier.

Selon une autre variante possible, le dispositif est caractérisé en ce que les deux capacités liquides communiquent respectivement avec les chambres d'un vérin à deux tiges. Des moyens pour déplacer le piston alternativement et avec la même amplitude de part et d'autre d'une position intermédiaire, sont prévus.

Selon un mode de réalisation possible, une extrémité du levier est reliée à un mécanisme d'entraînement oscillant à amplitude réglable comprenant par exemple un disque entraîné par un moteur et une biellette articulée entre le disque et le levier. Différents points d'articulation possibles sont prévus entre le disque et la biellette, pour ajuster les variations d'amplitude et donc de compression sur les capacités déformables et par conséquent la quantité de liquide déplacée à chaque cycle.

Selon un mode de réalisation possible, les deux capacités gaz communiquent entre elles et avec une même capacité intermédiaire rigide. Le volume de cette capacité est, de préférence, déterminé pour limiter les échauffements du système en fonction de la hauteur de la fréquence des cycles.

Selon un mode de réalisation possible, la capacité intermédiaire rigide comporte un détecteur de liquide. Ainsi, ce détecteur permet de détecter une fuite de liquide consécutive à la rupture d'un séparateur. Le détecteur est de préférence opérationnellement relié à un système d'arrêt du dispositif et au compteur de cycles associé. De cette façon, on peut opérer des cycles de déformation jusqu'à rupture du séparateur et comptabiliser le nombre de déformations que ledit séparateur a subi avant de se rompre.

Le dispositif qui vient d'être défini ci-dessus n'est pas limité à une paire de séparateurs fonctionnant en "push-pull". Un tel dispositif de test peut comporter une pluralité de paires de chambres rigides précitées accueillant des séparateurs précités, les capacités gaz correspondantes de chaque paire communiquant entre elles.

Par exemple, les chambres rigides peuvent être agencées côte à côte circulairement et les moyens précités faisant varier alternativement et en opposition de phase le volume liquide dans les capacités liquides de chaque paire peuvent comporter un mécanisme d'actionnement commun comprenant une couronne formant came (par exemple une came sinusoïdale) ladite came étant entraînée en rotation selon un axe passant par le centre du cercle le long duquel lesdites chambres rigides sont agencées.

L'invention sera mieux comprise et d'autres avantages de celle-ci apparaîtront plus clairement à la lumière de la description qui va suivre de plusieurs modes de réalisation d'un dispositif permettant de tester l'endurance d'un séparateur à membrane souple, donné uniquement à titre d'exemple et faite en référence aux dessins annexés, dans lesquels :
- la figure 1 est une vue schématique en élévation d'un dispositif de test selon l'invention ;
- la figure 2 est une vue de détail représentant la forme du séparateur lorsqu'il est déformé sous l'action du liquide ;
- la figure 3 est une vue de dessus du séparateur de la figure 2 ;
- la figure 4 est une vue schématique d'une variante des moyens pour faire varier alternativement et en opposition de phase le volume liquide dans chacune des capacités liquides du dispositif de la figure 1 ; et
- la figure 5 est une vue générale schématique en perspective d'un autre mode de réalisation d'un dispositif conforme à l'invention.

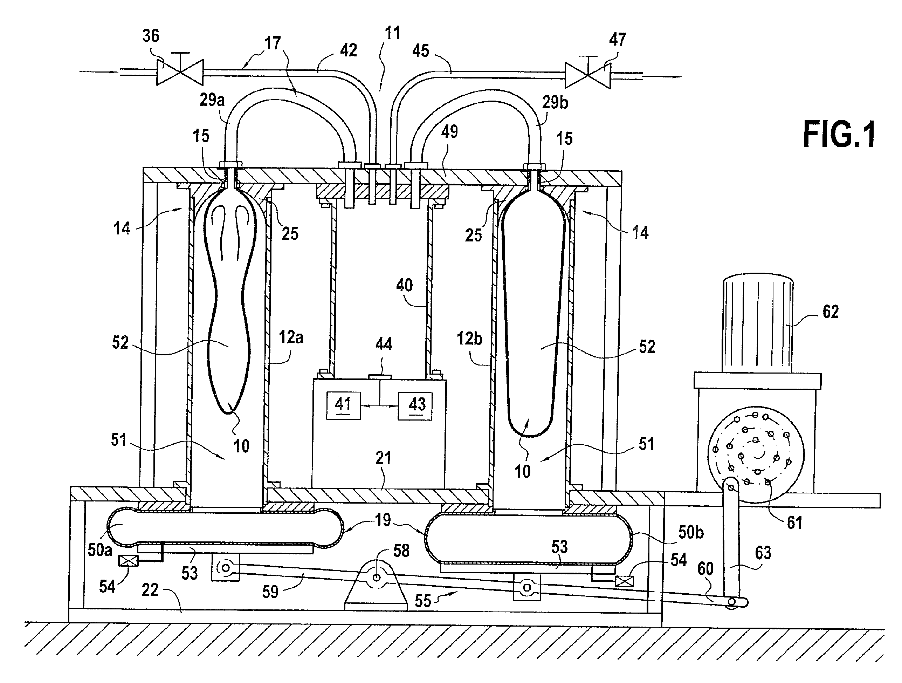

Le dispositif 11 représenté sur les figures 1 à 3, reçoit deux séparateurs souple 10 identiques en forme de "vessie". Il comporte, selon l'exemple, deux chambres rigides 12a, 12b, globalement cylindriques et tubulaires, aptes à recevoir chacune un séparateur 10. Chaque chambre 12a, 12b comporte à son extrémité supérieure un agencement de raccordement étanche 14 permettant d'adapter de façon étanche un embout tubulaire 15 du séparateur 10 à ladite extrémité supérieure. Le dispositif 11 comporte aussi des moyens 17 pour enfermer un gaz sous une pression prédéterminée dans les séparateurs (c'est-à-dire à l'intérieur des "vessies") et des moyens 19 pour déplacer cycliquement un liquide dans chaque chambre rigide 12a, 12b, c'est-à-dire à l'extérieur du séparateur engagé dans celle-ci. Ce mouvement cyclique du liquide a pour conséquence de faire décrire aux séparateurs remplis de gaz sous pression des cycles de déformation permettant d'évaluer leur longévité.

Selon l'exemple, les deux chambres rigides 12a, 12b sont fixées verticalement sur une plaque intermédiaire 21 horizontale. Cette plaque intermédiaire est elle-même montée au-dessus d'une embase 22 de façon à constituer un socle creux abritant une partie des moyens 19 pour déplacer alternativement le liquide dans les chambres rigides 12a, 12b.

Chaque chambre rigide 12a, 12b comporte, à sa partie supérieure, un couvercle 25 percé en son centre pour le passage de l'embout tubulaire 15 du séparateur. Celui-ci est relié à un élément de conduit 29a, 29b correspondant. Le montage du séparateur 10 dans la chambre rigide 12a, 12b correspondante est réalisé de façon étanche à l'huile de façon que le liquide engagé sous pression dans ladite chambre rigide ne puisse s'échapper autour de l'embout 15. Le montage est étanche au moins à la pression du test d'endurance (de l'ordre du bar). Cette pression est notablement plus faible que la pression d'utilisation pour laquelle le séparateur est conçu. Ceci permet d'appliquer des cycles de déformation à un rythme élevé, soit plusieurs hertz.

Les moyens 17 pour enfermer un gaz sous une pression prédéterminée dans les séparateurs 10 comportent une source d'azote sous pression communiquent avec les séparateurs via une vanne d'isolation 36. Celle-ci communique par un élément de conduit 29a, 29b correspondant avec l'embout tubulaire 15 de chaque séparateur.

En d'autres termes, lesdits agencements de raccordement 14 des deux chambres rigides 12a, 12b sont reliés par une liaison commune à volume constant pour partager une même quantité de gaz sous pression puisque les deux éléments de conduit 29a, 29b communiquent avec la vanne de commande 36. Lorsque la vanne de commande 36 est ouverte, on peut introduire une certaine quantité de gaz dans les deux séparateurs 10. Puis, la vanne de commande est fermée de sorte qu'une quantité prédéterminée de gaz sous pression se partage entre les deux séparateurs.

Selon une caractéristique avantageuse, ladite liaison commune comporte les deux éléments de conduit 29a, 29b et une capacité intermédiaire rigide 40, formant récepteur de liquide. Chaque élément de conduit 29a, 29b est connecté entre cette capacité intermédiaire 40 et ledit agencement de raccordement 14 de la chambre rigide 12a, 12b correspondante. La sortie de la vanne 36 communique par un conduit 42 avec la capacité intermédiaire 40. De plus, cette dernière comporte de préférence un détecteur de liquide 44 opérationnellement relié à un système d'alarme 41 et/ou à une commande d'arrêt d'un compteur de cycles de déformation 43. En effet, lorsque du liquide (de l'huile) pénètre dans ce récipient ou capacité intermédiaire, cela signifie que l'un des séparateurs 10 est hors d'usage et il convient de mémoriser le nombre de cycles qu'il a supporté avant de se rompre.

Un conduit d'évacuation de gaz 45 est connecté à la capacité intermédiaire 40. Il comporte une vanne d'évacuation 47. Pendant le test, cette vanne est fermée.

La capacité intermédiaire 40 est avantageusement transparente de sorte qu'une présence d'huile dans ce récipient, indiquant que l'un des séparateurs est hors d'usage, peut être détectée à la fois visuellement et aussi électroniquement, grâce au signal fourni par le détecteur 44.

Une plaque de fermeture 49 permet de relier les éléments de conduit 29a, 29b et les deux conduits 42, 45 audit récipient intermédiaire. Les extrémités supérieures des deux chambres 12a, 12b, munies de leurs couvercles 25 sont solidaires de cette plaque de fermeture 49.

Comme mentionné précédemment, une quantité prédéterminée de liquide est emprisonnée autour des séparateurs souples 10 et dans lesdits moyens 19 pour déplacer cycliquement le liquide. Avantageusement, le liquide remplit tout l'espace disponible défini ci-dessus.

Ainsi, pour chaque séparateur 10, on a défini une capacité liquide 51 entre la paroi externe du séparateur et la chambre rigide et une capacité gaz 52 constituée par l'intérieur du séparateur lui-même. Les deux capacités gaz 52 sont interconnectées en permanence pendant le test et communiquent aussi avec la capacité intermédiaire 40. Ces éléments interconnectés renferment donc pendant le test une quantité donnée de gaz sous pression et pendant tous les échanges entre les séparateurs, le volume total du gaz emprisonné sera sensiblement constant.

Selon un mode de réalisation possible, les moyens 19 pour déplacer cycliquement le liquide comprennent deux chambres déformables 50a, 50b communiquant respectivement avec les chambres rigides 12a, 12b et un mécanisme d'actionnement 55 agencé pour faire varier cycliquement et alternativement le volume des chambres déformables. Comme on le voit sur les dessins, chaque chambre rigide 12a, 12b est prolongée, au-delà de son extrémité inférieure, par une telle chambre déformable 50a, 50b. Celles-ci sont liées au mécanisme d'actionnement commun 55 agencé pour les faire fonctionner en opposition de phase.

Selon l'exemple, les deux chambres déformables 50a, 50b, communiquant respectivement avec les deux chambres rigides 12a, 12b, sont actionnés par l'intermédiaire d'un même levier 59 dont le point d'appui 58 est équidistant desdits chambres déformables. Dans l'exemple, chaque chambre déformable 50a, 50b a la forme d'un coussin flexible en communication directe avec la chambre rigide correspondante 12a, 12b. Chaque coussin est lié à un plateau 53 articulé au levier 59. Les plateaux 53 sont articulés au levier 59 de part et d'autre et à égale distance du point d'appui 58. Une extrémité 60 du levier 59 est reliée à un mécanisme d'entraînement à amplitude et fréquence réglables comprenant un disque 61 entraîné par un moteur 62 et une biellette 63 articulée entre le disque et le levier. Le disque 61 comprend des points de raccordement à la biellette 63 situés à des distances radiales différentes pour le réglage de l'amplitude de déplacement du levier 59. La variation de la quantité de liquide introduite dans chaque chambre 12a, 12b est sinusoïdale en fonction du temps. Le liquide peut être introduit dans chaque coussin via une vanne d'arrêt 54 et un conduit traversant le plateau 53. D'autres mécanismes d'actionnement équivalents sont bien entendu possibles.

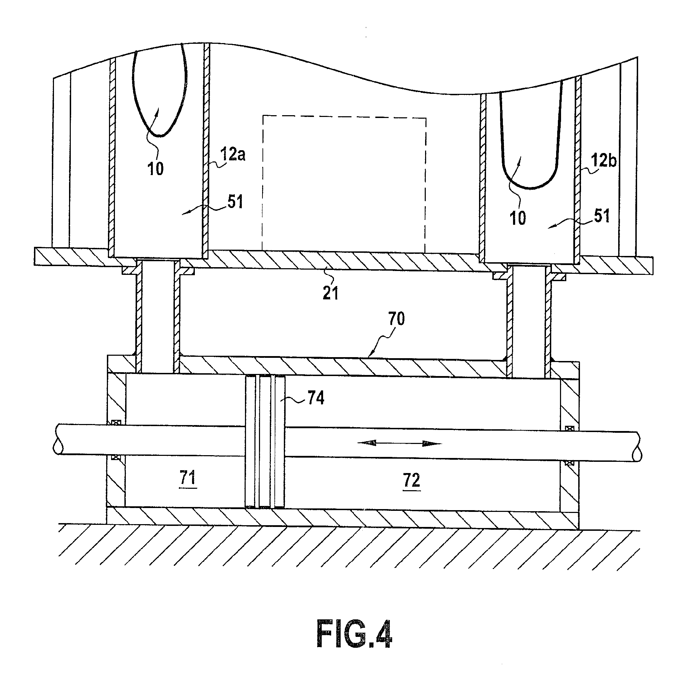

Par exemple, on peut remplacer les coussins et le levier par un vérin à deux tiges 70, comme représenté sur la figure 4.

Les chambres 71, 72 du vérin sont directement et respectivement connectées aux capacités liquides 51. Leurs volumes varient en opposition de phase et de la même quantité lorsqu'on déplace le piston 74 dans un sens, puis dans l'autre avec la même amplitude.

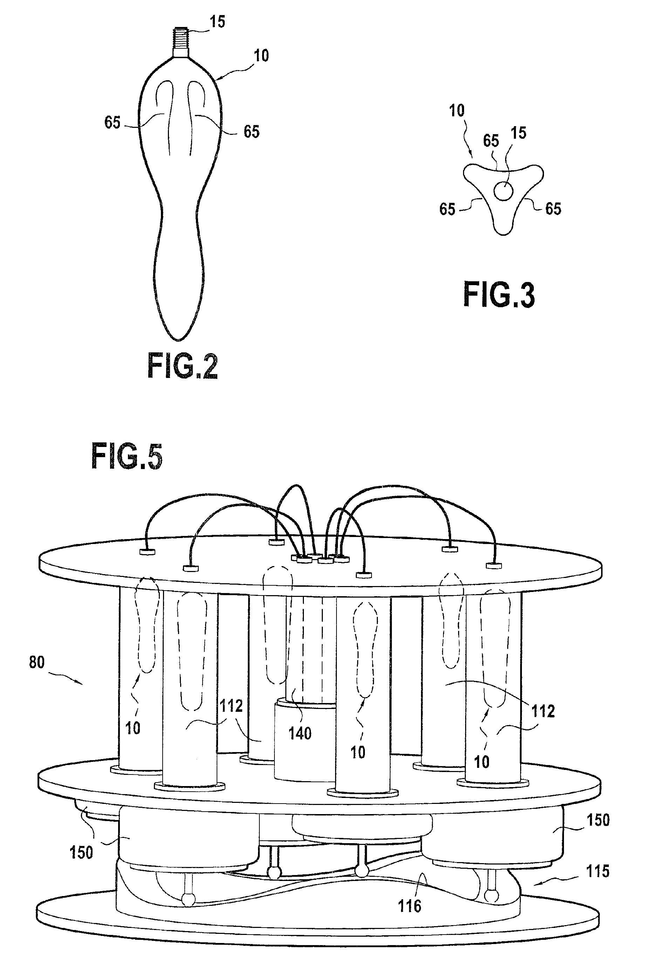

Pendant toute la durée du test d'endurance, chaque séparateur 10 est successivement et cycliquement comprimé de l'extérieur (ce qui aboutit à réduire son volume) puis relâché pour lui permettre de reprendre un volume normal. Sur la figure 1, le séparateur comprimé de l'extérieur est celui de gauche tandis que le séparateur occupant son volume normal est celui de droite. Comme le total des volumes d'huile respectivement déplacés pendant chaque cycle reste sensiblement constant et comme les deux séparateurs sont reliés en permanence par une liaison commune à volume constant (29a, 29b, 40), la pression de gaz à l'intérieur des deux séparateurs reste sensiblement constante. Comme le montrent les figures 2 et 3, le séparateur 10 se déforme d'une façon spécifique en définissant plusieurs lobes longitudinaux 65 qui créent longitudinalement des zones de fatigue localisées. Au bout d'un grand nombre de cycles, le séparateur finit par se rompre le long d'une de ces zones de fatigue. Lorsque la rupture est détectée, on comptabilise le nombre de cycles effectués ce qui permet d'évaluer la durée de vie du séparateur en forme de vessie.

La figure 5 illustre un autre dispositif possible 80 remarquable en ce qu'il comporte une pluralité de paires de chambres rigides 112 du type précité, agencées côte à côte circulairement. Dans l'exemple, le dispositif comporte trois paires de récipients rigides. Ces récipients sont reliés entre eux pneumatiquement de la même façon que décrit sur la figure 1, c'est-à-dire que tous les séparateurs 10 communiquent deux à deux et sont reliés entre eux pour partager une même quantité de gaz sous pression.

Selon ce mode de réalisation, les moyens pour déplacer cycliquement un liquide dans les récipients 112 sont liés à un mécanisme d'actionnement commun 115 comprenant une couronne formant une sorte de came sinusoïdale 116. La came est entraînée par un moteur selon un axe passant par le centre du cercle le long duquel les récipients rigides 112 sont agencés. Plus précisément, la came sinusoïdale coopère avec toutes les chambres déformables 150 associées auxdites chambres rigides 112.

Au centre de l'équipement se trouve un récipient intermédiaire 140 comportant trois compartiments distincts. Chaque compartiment est mis en communication avec les capacités gaz de deux séparateurs actionnés en opposition de phase via le mécanisme d'actionnement 115.

## Revendications

1. Dispositif de tests de fiabilité de séparateurs souples entre un fluide liquide et un fluide gazeux comportant deux chambres rigides identiques (12a, 12b, 112), chacune des dites chambres étant divisée par un séparateur souple identique (10) en une capacité liquide (51) et une capacité gaz (52), les deux capacités gaz (52) communiquant entre elles et les deux capacités liquides (51) communiquant avec des moyens faisant varier alternativement le volume dans chacune des deux capacités liquides (51), le dispositif de tests de fiabilité étant **caractérisé en ce que** les deux capacités gaz (52) communiquent entre elles par une capacité intermédiaire (40, 140) comportant un détecteur de liquide (44).

2. Dispositif selon la revendication 1, **caractérisé en ce que** les variations de volume de liquide dans chacune des deux capacités liquides (51) sont sensiblement égales.

3. Dispositif selon la revendication 1 ou 2 **caractérisé en ce que** chacune des deux capacités liquides (51) communique avec une capacité déformable (50a, 50b, 150), les deux capacités déformables (50a, 50b, 150) étant de même volumes et alternativement soumises à des déformations variables identiques.

4. Dispositif selon la revendication 3, **caractérisé en ce que** les capacités déformables (50a, 50b, 150) sont en forme de coussins, chacun des dits coussins par l'intermédiaire d'un fond rigide formant un plateau (53) étant soumis à l'action d'un levier (59) oscillant autour d'un axe équidistant des dits coussins et exerçant alternativement des forces de compression similaires sur lesdits coussins.

5. Dispositif selon la revendication 4, **caractérisé en ce qu'**une extrémité (60) dudit levier (59) est reliée à un mécanisme d'entraînement à amplitude et fréquence réglables.

6. Dispositif selon la revendication 5, **caractérisé en ce que** ledit mécanisme comporte un moteur (62) entraînant un disque (61) comprenant des points de raccordement à des distances radiales différentes et **en ce que** ledit levier (59) est couplé sélectivement de façon articulée à l'un de ces points de raccordement pour le réglage de ladite amplitude.

7. Dispositif selon l'une des revendications 1 ou 2, **caractérisé en ce que** les deux capacités liquides (51) communiquent respectivement avec les chambres (71, 72) d'un vérin à deux tiges (70).

8. Dispositif selon l'une des revendications précédentes, **caractérisé en ce que** ladite capacité intermédiaire est rigide (40).

9. Dispositif selon l'une quelconque des revendications précédentes, **caractérisé en ce qu'**un conduit (29a, 29b) est connecté entre chaque capacité gaz (52) et ladite capacité intermédiaire (40,140).

10. Dispositif selon l'une quelconque des revendications précédentes, **caractérisé en ce que** ledit détecteur de liquide (44) est opérationnellement relié à un système d'arrêt du dispositif et/ou à une commande d'arrêt d'un compteur de cycles de déformation (43).

11. Dispositif selon l'une des revendications précédentes, **caractérisé en ce qu'**il comporte une pluralité de paires de chambres rigides (112) précitées accueillant des séparateurs précités et **en ce que** les capacités gaz correspondantes de chaque paire communiquent entre elles.

12. Dispositif suivant la revendication 11 dans lequel les capacités gaz de chaque paire de chambres rigides (112) communiquent entre elles par l'intermédiaire de la capacité intermédiaire (140) rigide associée à chacune des paires correspondantes de capacités gaz.

13. Dispositif selon l'une des revendications 11 ou 12, **caractérisé en ce que** les chambres rigides (112) sont agencées côte à côte circulairement et **en ce que** les moyens précités faisant varier alternativement et en opposition de phase le volume liquide dans les capacités liquides de chaque paire comportent un mécanisme d'actionnement commun (115) comprenant une couronne formant une came (116), ladite came (116) étant entraînée en rotation selon un axe passant par le centre du cercle le long duquel lesdites chambres rigides (112) sont agencées.

## Patentansprüche

1. Vorrichtung für Zuverlässigkeitstests von flexiblen Trennelementen zwischen einem flüssigen Fluid und einem gasförmigen Fluid, umfassend zwei identische starre Kammern (12a, 12b, 112), wobei jede der Kammern geteilt ist durch
ein identisches flexibles Trennelement (10) in einen Flüssigkeitsbehälter (51) und einen Gasbehälter (52), wobei die beiden Gasbehälter (52) miteinander in Verbindung stehen und die beiden Flüssigkeitsbehälter (51) mit Mitteln in Verbindung stehen, die abwechselnd das Volumen in jedem der beiden Flüssigkeitsbehälter (51) variieren,
wobei die Vorrichtung für Zuverlässigkeitstests **dadurch gekennzeichnet ist, dass** die beiden Gasbehälter (52) miteinander durch einen Zwischenbehälter (40, 140), umfassend einen Flüssigkeitsdetektor (44), in Verbindung stehen.

2. Vorrichtung nach Anspruch 1, **dadurch gekennzeichnet, dass** die Variationen des Flüssigkeitsvolumens in jedem der beiden Flüssigkeitsbehälter (51) im Wesentlichen gleich sind.

3. Vorrichtung nach Anspruch 1 oder 2, **dadurch gekennzeichnet, dass** jeder der beiden Flüssigkeitsbehälter (51) mit einem verformbaren Behälter (50a, 50b, 150) in Verbindung steht, wobei die beiden verformbaren Behälter (50a, 50b, 150) dasselbe Volumen haben und abwechselnd identischen variablen Verformungen unterzogen werden.

4. Vorrichtung nach Anspruch 3, **dadurch gekennzeichnet, dass** die verformbaren Behälter (50a, 50b, 150) kissenförmig sind, wobei jedes der Kissen mit Hilfe eines starren Bodens, der eine Platte (53) bildet, der Wirkung eines Hebels (59) ausgesetzt ist, der um eine Achse in gleichem Abstand zu den Kissen schwenkt und abwechselnd ähnliche Kompressionskräfte auf die Kissen ausübt.

5. Vorrichtung nach Anspruch 4, **dadurch gekennzeichnet, dass** ein Ende (60) des Hebels (59) mit einem Antriebsmechanismus mit einstellbarer Amplitude und Frequenz verbunden ist.

6. Vorrichtung nach Anspruch 5, **dadurch gekennzeichnet, dass** der Mechanismus einen Motor (62) umfasst, der eine Scheibe (61), umfassend Anschlusspunkte in unterschiedlichen Radialabständen, antreibt, und dass der Hebel (59) selektiv gelenkig an einen dieser Anschlusspunkte für die Einstellung der Amplitude gekoppelt ist.

7. Vorrichtung nach einem der Ansprüche 1 oder 2, **dadurch gekennzeichnet, dass** die beiden Flüssigkeitsbehälter (51) jeweils mit den Kammern (71, 72) eines Zylinders mit zwei Stangen (70) in Verbindung stehen.

8. Vorrichtung nach einem der vorhergehenden Ansprüche, **dadurch gekennzeichnet, dass** der Zwischenbehälter starr ist (40).

9. Vorrichtung nach einem der vorhergehenden Ansprüche, **dadurch gekennzeichnet, dass** eine Leitung (29a, 29b) zwischen jedem Gasbehälter (52) und dem Zwischenbehälter (40, 140) angeschlossen ist.

10. Vorrichtung nach einem der vorhergehenden Ansprüche, **dadurch gekennzeichnet, dass** der Flüssigkeitsdetektor (44) operativ mit einem System zum Anhalten der Vorrichtung und/oder einer Steuerung zum Anhalten eines Zählers von Verformungszyklen (43) verbunden ist.

11. Vorrichtung nach einem der vorhergehenden Ansprüche, **dadurch gekennzeichnet, dass** sie eine Vielzahl von Paaren von vorgenannten Kammern (112) umfasst, die vorgenannte Trennelemente aufnehmen, und dass die entsprechenden Gasbehälter jedes Paars miteinander in Verbindung stehen.

12. Vorrichtung nach Anspruch 11, bei der die Gasbehälter jedes Paars von starren Kammern (112) miteinander über den starren Zwischenbehälter (140) in Verbindung stehen, der jedem der entsprechenden Paare von Gasbehältern zugeordnet ist.

13. Vorrichtung nach einem der Ansprüche 11 oder 12, **dadurch gekennzeichnet, dass** die starren Kammern (112) nebeneinander kreisförmige angeordnet sind, und dass die vorgenannten Mittel, die abwechselnd und im Phasengegensatz das flüssige Volumen in den Flüssigkeitsbehältern jedes Paars variieren, einen gemeinsamen Betätigungsmechanismus (115) umfassen, der eine eine Nocke (116) bildenden Krone umfasst, wobei die Nocke (116) in Drehung entlang einer Achse angetrieben wird, die durch den Mittelpunkt des Kreises verläuft, entlang dessen die starren Kammern (112) angeordnet sind.

## Claims

1. A device for testing the reliability of flexible separators for separating a liquid fluid and a gaseous fluid comprising two identical rigid chambers (12a, 12b, 112), each of said chambers being subdivided by an identical flexible separator (10) into a liquid capacity (51) and a gas capacity (52), the two gas capacities (52) communicating with each other and the two liquid capacities (51) communicating with means for causing the volume in each of the two liquid capacities (51) to vary in alternation, the device for testing the reliability being **characterized in that** the two gas capacities (52) communicate with each other by means of an intermediate capacity (40, 140) comprising a liquid detector.

2. A device according to claim 1, **characterized in that** the variations of liquid volume in each of the two liquid capacities (51) are substantially identical.

3. A device according to claim 1 or claim 2, **characterized in that** each of the two liquid capacities (51) communicates with a deformable capacity (50a, 50b, 150), the two deformable capacities (50a, 50b, 150) having the same volume and being subjected in alternation to identical varying deformation.

4. A device according to claim 3, **characterized in that** the deformable capacities (50a, 50b, 150) are in the form of bags, each of said bags being subjected via a rigid bottom forming a plate (53) to the action of a lever (59) oscillating about an axis that is equidistant between said bags and that exerts similar compression forces on said bags in alternation.

5. A device according to claim 4, **characterized in that** one end (60) of said lever (59) is connected to a drive mechanism presenting adjustable amplitude and frequency.

6. A device according to claim 5, **characterized in that** said mechanism comprises a motor (62) driving a disk (61) having connection points at different radial distances, and **in that** said lever (59) is selectively coupled in hinged manner to a selected one of said connection points in order to adjust said amplitude.

7. A device according to any claim 1 or claim 2, **characterized in that** the two liquid capacities (51) communicate respectively with the chambers (71, 72) of a two-rod actuator (70).

8. A device according to any preceding claim, **characterized in that** said intermediate capacity (40) is rigid.

9. A device according to any one of the preceding claims, **characterized in that** a duct (29a, 29b) is connected between each gas capacity (52) and said rigid intermediate capacity (40, 140).

10. A device according to any one of the preceding claims, **characterized in that** said liquid detector (44) is operationally connected to a system for stopping the device and/or to means for stopping a deformation cycle counter (43).

11. A device according to any preceding claim, **characterized in that** it includes a plurality of pairs of said rigid chambers (112) receiving said separators, and **in that** the corresponding gas capacities in each pair communicate with one another.

12. A device according to claim 11 wherein the gas capacities of each pair of rigid chambers (112) communicate with each other via a rigid intermediate capacity (140) associated with each of the corresponding pairs of gas capacities.

13. A device according to any one of claims 11 or claim 12, **characterized in that** the rigid chambers (112) are arranged side by side in a circle, and **in that** the above-mentioned means for causing the volumes of liquid in the liquid capacities of each pair to vary in alternation and in phase opposition comprise a common actuator mechanism (115) comprising a ring forming a cam (116), said cam (116) being driven in rotation about an axis passing through the center of the circle around which said rigid chambers (112) are arranged.
